(19) Europäisches Patentamt / European Patent Office / Office européen des brevets

(11) **EP 3 821 268 B1**

(12) **EUROPÄISCHE PATENTSCHRIFT**

(45) Veröffentlichungstag und Bekanntmachung des Hinweises auf die Patenterteilung:
**04.10.2023   Patentblatt 2023/40**

(21) Anmeldenummer: **19719828.6**

(22) Anmeldetag: **23.04.2019**

(51) Internationale Patentklassifikation (IPC):
**G01S 5/02** (2010.01)

(52) Gemeinsame Patentklassifikation (CPC):
**G01S 5/0294**

(86) Internationale Anmeldenummer:
**PCT/EP2019/060386**

(87) Internationale Veröffentlichungsnummer:
**WO 2020/011413 (16.01.2020 Gazette 2020/03)**

(54) **ORTUNGSVERFAHREN ZUR LOKALISIERUNG WENIGSTENS EINES OBJEKTES UNTER VERWENDUNG WELLENBASIERTER SIGNALE SOWIE ORTUNGSSYSTEM**

LOCALIZATION METHOD FOR LOCATING AT LEAST ONE OBJECT USING WAVE-BASED SIGNALS AND LOCALIZATION SYSTEM

PROCÉDÉ DE LOCALISATION POUR LOCALISER AU MOINS UN OBJET À L'AIDE DE SIGNAUX À BASE D'ONDES ET SYSTÈME DE LOCALISATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2018   DE 102018116688**

(43) Veröffentlichungstag der Anmeldung:
**19.05.2021   Patentblatt 2021/20**

(73) Patentinhaber: **Friedrich-Alexander-Universität Erlangen-Nürnberg
91054 Erlangen (DE)**

(72) Erfinder:
• **LIPKA, Melanie
92348 Berg (DE)**
• **SIPPEL, Erik
91058 Tennenlohe (DE)**
• **VOSSIEK, Martin
90766 Fürth (DE)**

(74) Vertreter: **Herrmann, Uwe
Lorenz Seidler Gossel
Rechtsanwälte Patentanwälte
Partnerschaft mbB
Widenmayerstraße 23
80538 München (DE)**

(56) Entgegenhaltungen:
• **SIMO SARKKA ET AL: "Phase-Based UHF RFID Tracking With Nonlinear Kalman Filtering and Smoothing", IEEE SENSORS JOURNAL, IEEE SERVICE CENTER, NEW YORK, NY, US, Bd. 12, Nr. 5, 1. Mai 2012 (2012-05-01), Seiten 904-910, XP011440769, ISSN: 1530-437X, DOI: 10.1109/JSEN.2011.2164062**
• **EMIDIO DIGIAMPAOLO ET AL: "Mobile Robot Localization Using the Phase of Passive UHF RFID Signals", IEEE TRANSACTIONS ON INDUSTRIAL ELECTRONICS., Bd. 61, Nr. 1, 1. Januar 2014 (2014-01-01) , Seiten 365-376, XP055604532, USA ISSN: 0278-0046, DOI: 10.1109/TIE.2013.2248333**
• **MARTINELLI FRANCESCO: "A Robot Localization System Combining RSSI and Phase Shift in UHF-RFID Signals", IEEE TRANSACTIONS ON CONTROL SYSTEMS TECHNOLOGY, IEEE SERVICE CENTER, NEW YORK, NY, US, Bd. 23, Nr. 5, 1. September 2015 (2015-09-01), Seiten 1782-1796, XP011666128, ISSN: 1063-6536, DOI: 10.1109/TCST.2014.2386777 [gefunden am 2015-08-11]**

**Beschreibung**

Die Erfindung betrifft ein Ortungsverfahren zur Lokalisierung wenigstens eines Objektes unter Verwendung wellenbasierter Signale, bei diesem von dem zu lokalisierenden Objekt ein Wellenfeld ausgeht und das vom Objekt ausgehende Wellenfeld von einer Anzahl N Empfänger empfangen wird. Das Wellenfeld kann sowohl vom Objekt selbst emittiert werden, als auch durch eine äußere Quelle bestrahlt werden und deren Welle reflektieren.

Übliche Verfahren für die wellenbasierte Ortung beruhen auf Abstandsinformationen aus Laufzeitmessungen (z.B. Multilateration), Laufzeitunterschiedsmessungen (TDOA - Time Difference of Arrival Verfahren), Winkelmessungen (z.B. Multiangulation) aus Phaseninformationen oder einer Kombination aus mehreren Techniken. Einen Überblick über diese wohlbekannten Verfahren, die vielfältig zu Lokalisierung eingesetzt werden, findet sich beispielsweise in "Wireless Local Positioning - Concepts, Solutions, Applications" von Vossiek, M., Wiebking, L., Gulden, P., Wieghardt J. und Hoffmann C. und ein Beispiel für die Kombination der Verfahren in "A Bilateral 24 GHz Wireless Positioning System for 3D Real-Time Localization of People and Mobile Robots" von Dobrev Y. und Shmakov D. Beispielsweise offenbart die Druckschrift Simo Särkkä et al, "Phase-Based UHF RFID Tracking With Nonlinear Kalman Filtering and Smoothing", IEEE SENSORS JOURNAL, IEEE SERVICE CENTER, NEW YORK, NY, US, (20120501), vol. 12, no. 5, doi:10.1109/JSEN.2011.2164062, ISSN 1530-437X, pages 904 - 910, ein Ortungsverfahren zur Lokalisierung eines Objekts mittels RFID Tracking.

Bei den bekannten Verfahren wird jeweils von einzelnen Messinstrumenten (Stationen) die relevante Information (z.B. Abstand und/oder Winkel zu einer weiteren Station) berechnet und daraus erfolgt die Berechnung der Position. Als Beispiel sei hier die Multilateration angeführt, bei der mittels einer Laufzeitbestimmung (z.B. Mittels FMCW Radar, wie in "Understanding Millimetre Wave FMCW Radar" von Brooker G.M. ausgeführt) der Abstand gemessen wird. Durch die Bildung eines Schnittpunkts der Kreissegmente für mindestens zwei (2D Position) oder drei (3D Position) räumlich getrennte Stationen, deren Positionen bekannt sind, kann nun ein Objekt, Transponder, etc. geortet werden.

Im Folgenden wird das wellenbasierte Messinstrument als Radar bezeichnet. Dass die dargestellten Verfahren mit allen Wellenformen (z.B. elektromagnetisch, optisch oder akustisch) durchgeführt werden können, ist in der Fachwelt allgemein bekannt. Die Vorrichtung für den Empfang des Signals wird Im Folgenden als Antenne bezeichnet. Das wellenbasierte Messinstrument kann jedoch, wie in der Fachwelt allgemein bekannt ist, mit einer beliebigen Vorrichtung versehen sein, die den Empfang der Welle ermöglicht (z.B. Antenne bei elektromagnetischen Wellen; Photodetektoren oder elektrooptische Mischer bei optischen Wellen, Schallwandler bzw. Mikrophone bei akustischen Wellen).

Die bislang aus dem Stand der Technik bekannten Verfahren haben jedoch einige Nachteile. Exemplarisch werden an dieser Stelle die Nachteile des Multiangulationsverfahrens herausgegriffen:

- Der messbare Winkelbereich Ist auf den Eindeutigkeitsbereich der Anordnung beschränkt
- Mehrwegeausbreitungen können dazu führen, dass an den Antennen die Phase eines Mehrwegs gemessen und damit der Winkel falsch geschätzt wird, was die Position deutlich verfälscht
- Ist die Winkelmessung eines Radars offensichtlich falsch (z.B. weil es bei einem redundanten System stark von den Ergebnissen der anderen Radare abweicht) und wird das Messergebnis dieses Radars daher nicht für die Positionsbestimmung genutzt, trägt kein Phasenwert dieses Radars mehr zur Ortung bei. Sprich die Phasenwerte werden nicht einzeln bewertet und somit fallen kollektiv auch alle Phasenwerte des Radars weg, auch wenn lediglich ein Bruchteil der Phasenwerte des Radars für diese falsche Winkelschätzung verantwortlich ist.

- Da der Messraum abgerastert werden muss und für jeden Punkt Hypothese und Messung verrechnet werden müssen, entsteht ein hoher Rechenaufwand
- Da die Antennen einen geringen Abstand (typischerweise im Bereich kleiner einer Wellenlänge bis zu wenigen Wellenlängen) haben müssen, kommt es zu Übersprechen zwischen den Antennen was Störungen verursacht.

Es wird daher nach einer verbesserten Lösung für ein Ortungsverfahren gesucht, das zumindest einen Teil der zuvor aufgezählten Nachteile zu überwinden weiß.

Gelöst wird diese Aufgabe durch ein Verfahren gemäß den Merkmalen des Anspruchs 1 und ein System gemäß dem Anspruch 15. Vorteilhafte Ausgestaltungen sind Gegenstand der abhängigen Ansprüche.

Erfindungsgemäß wird nun ein Ortungsverfahren vorgeschlagen, das die aktuelle Position eines Objektes direkt aus wenigstens einer vorhergehenden Position des Objektes und wenigstens zwei, durch mindestens einen Empfänger gemessenen Phasenwerten ermittelt bzw. schätzt, d.h. die Positionsbestimmung erfolgt rekursiv auf Grundlage einer Objektposition aus der Vergangenheit. Grundvoraussetzung ist hierfür, dass das zu ortende Objekt ein entsprechendes Wellenfeld erzeugt, das sich in Richtung wenigstens eines Empfängers ausbreitet. Ein solcher Empfänger kann dann mithilfe wenigstens einer Empfangsantenne ein Messsignal des Wellenfeldes erfassen, aus dessen Signalphasenverlauf wenigstens ein Signalphasenwert entnommen werden kann. Als Phasenwert kann einerseits die durch wenigstens einen Empfänger gemessene Signalphase des Messsignals verstanden werden, erfindungsgemäß wird als Phasenwert jedoch auch wenigstens eine aus mehreren Signalphasen abgeleitete Größe verstanden. Eine solche abgeleitete Größe kann bspw. die Differenz oder Summe aus wenigstens zwei Signalphasenwerten sein.

Für die wenigstens zwei zur Ortung herangezogenen gemessenen Phasenwerte ist es entscheidend, dass sich für beide Werte eine eindeutige Beziehung zwischen der Signalphase und einer Signallaufzeit zwischen Sender/Objekt und Empfänger bzw. einer Signallaufzeitdifferenz herstellen lässt. Die Abhängigkeit der Signalphase von der Signallaufzeit bedeutet im Umkehrschluss, dass die Signalphase auch vom Abstand zwischen Objekt und Empfänger gleichermaßen abhängig ist. Damit lässt sich aus einem hypothetischen Sender/Objekt-Empfänger Abstand ein hypothetischer Phasenwert ermitteln. Auf Grundlage dieser mathematischen Zusammenhänge kann durch Vergleich der gemessenen Phasenwerte mit hypothetischen Phasenwerten der aktuelle Abstand zwischen Objekt und Empfänger und demzufolge die aktuelle Position des Objektes relativ zum Empfänger ermittelt werden, wobei hier Im Sinne eines rekursiven Vorgehens als Ausgangspunkt wenigstens eine vorhergehenden Position des Objektes verwendet und durch Anpassung dieser Position der Fehler zwischen gemessenem und hypothetischen Phasenwert soweit wie möglich minimiert wird.

Für die mehrdimensionale Positionsermittlung ist der Vergleich von wenigstens zwei gemessenen Phasenwerten mit einer korrespondierenden Anzahl hypothetischer Phasenwerte zielführend. Wie bereits zuvor angedeutet müssen die Phasenwerte nicht unmittelbar miteinander verglichen werden, sondern es werden erfindungsgemäß stattdessen auch Summen bzw. Differenzen zwischen gemessenen Phasenwerten mit korrespondierenden Summen bzw. Differenzen hypothetischer Phasenwerte verglichen werden. Diese Optionen lassen sich durch die Verwendung entsprechender Linearkombinationen abbilden, d.h. eine Linearkombination verfügbarer gemessener Phasenwerte wird mit einer Linearkombination hypothetischer Phasenwerte verglichen. Durch geeignete Wahl der Vorfaktoren der Linearkombinationen lassen sich dementsprechend Summen und/oder Differenzen von beliebig gewichteten Phasenwerten als auch die Phasenwerte unmittelbar miteinander vergleichen.

Hierbei kann auch die Sendephase des zu ortenden Objektes rekursiv mit geschätzt werden. Somit kann, mithilfe des Zusammenhangs zwischen Abstand und Phase, Information über die Position des zu ortenden Objektes erlangt werden, wenn sich die Sendephase des zu ortenden Objektes nur langsam ändert (oder ein bekannter Zusammenhang existiert).

Als Linearkombination soll im Rahmen der vorliegenden Erfindung auch der Fall verstanden werden, dass einer oder mehrere bzw. alle Vorfaktoren den Wert Null annehmen.

Maßgeblich ist lediglich, dass für eine Positionsschätzung wenigstens zwei Messsignale zur Verfügung stehen, die einen stabilen Phasenbezug zueinander haben. Üblicherweise werden dazu wenigstens zwei Messsignale für ein Wellenfeld und damit zwei Phasenwerte durch wenigstens zwei räumlich voneinander getrennte Empfänger bzw. Antennen erfasst. Hierbei kann es sich bspw. um eine Radarstation mit einer Antennenanordnung von wenigstens zwei Antennen handeln. Es kann sich jedoch ebenfalls um zwei vollständig separate Empfänger handeln. Idealerweise stehen $N_R$ Empfängerstationen zur Verfügung, die jeweils bis zu N Antennen aufweisen. Dabei kann die Anzahl der Antennen an jeder Empfängerstation unterschiedlich und beliebig sein. In diesem Fall stehen in jedem Empfänger bis zu N Phasenwerte zur Verfügung, die in einem stabilen Phasenbezug zueinander stehen. In Summe stehen also $N_R$ Sätze an bis zu N Phasenwerten zur Verfügung. Bei kohärenten Sendern besteht zusätzlich auch ein stabiler Phasenbezug zwischen den Stationen. Durch Bildung geeigneter Linearkombinationen zwischen den verfügbaren Phasenwerten kann dann durch Vergleich mit den korrespondierenden Linearkombinationen der hypothetischen Phasenwerte eine exakte Positionsschätzung erfolgen.

Die Phasenwerte müssen jedoch nicht zwingend von räumlich getrennten Empfängern stammen. Denkbar Ist es, dass sich die wenigstens zwei Phasenwerte durch Entnahme aus dem Messsignal zu unterschiedlichen Zeitpunkten ergeben. Für diesen Fall ist eine Positionsschätzung auch mit nur einem Empfänger denkbar. Auch können sich die wenigstens zwei gemessenen Phasenwerte aus Messsignalen mit unterschiedlichen Frequenzen ergeben, d.h. vom Objekt gehen daher Wellenfelder mit unterschiedlichen Frequenzen aus, was empfängerseitig die Messung von wenigstens zwei Phasenwerten für die Messsignale mit unterschiedlicher Frequenz gestattet. Des Weiteren können Kombinationen dieser Verfahren verwendet werden.

Die Ausbreitung des Wellenfeldes vom Objekt in Richtung des wenigstens einen Empfängers kann dadurch hervorgerufen werden, dass das zu ortende Objekt an einer zu detektierenden Position P eine anderswo abgestrahlte Welle streut bzw. reflektiert. Alternativ kann das zu ortende Objekt unmittelbar am Ort P eine Funk- bzw. Sendevorrichtung aufweisen, die ein entsprechendes Sendesignal abstrahlt. Möglich ist es ebenso, dass das Objekt von sich aus, bspw. eine Wärmestrahlung bzw. eine Radioemission, in Form einer Welle abgibt.

Geht von dem Objekt ein Wellenfeld mit unterschiedlichen Frequenzen aus, so wird dies durch eine entsprechende Nichtlinearität des Objektes bei der Reflexion bzw. die nichtlineare Charakteristik der integrierten Funk- bzw. Sendevorrichtung des Objektes erzeugt.

Beispielsweise gibt wenigstens ein Sender ein Wellenfeld mit einer Frequenz f0 ab. Das zu lokalisierende Objekt erzeugt als Antwort daraufhin ein Wellenfeld, das wegen der Nichtlinearität des Objektes Vielfache der Frequenz f0 umfasst. Die Phasenwerte der unterschiedlichen Frequenzen werden dann durch ein oder mehrere Empfänger gemessen und dem vorgenannten Auswerteverfahren unterzogen.

Das vom Sender initial ausgehende Wellenfeld weist zumindest eine Frequenz, vorzugsweise zumindest zwei Frequenzen (f1; f2; f3;....; fn) auf. Durch die Nichtlinearität des zu lokalisierenden Objektes werden Vielfache (n1*f1; n2*f2; n3*f3;....; nn*fn) und Intermodulationsprodukte (n1*f1+n2*f2+...+nn*fn;...) erzeugt, deren Phasenwerte durch den wenigstens einen Empfänger gemessen werden. Vorstellbar ist es ebenso, dass das vom Sender ausgehende Wellenfeld zumindest eine Frequenz, vorzugsweise zumindest zwei Frequenzen (f1; f2; f3;....; fm) umfasst, das zu lokalisierende Objekt die Frequenz/Frequenzen (fm+1,...,fn) jedoch selbst erzeugt und aufgrund seiner Nichtlinearität Vielfache und Intermodulationsprodukte erzeugt, deren Phasenwerte gemessen werden.

Durch die Verwendung von Linearkombinationen und geschickter Wahl der dort verwendeten Vorfaktoren ist es möglich, etwaige Informationen zur Sendephase herauszukürzen. Dadurch muss für das vorgestellte erfindungsgemäße Verfahren keine Information über die Kohärenz von den Empfangssignalen zu den Sendesignalen vorliegen, wenn sich aus mindestens zwei räumlich getrennten Signalen eine Phase ableiten lässt.

Die Vorrichtung für den Empfang des Signals wird im Folgenden als Antenne bezeichnet. Das wellenbasierte Messinstrument kann jedoch in Abhängigkeit des verwendeten Wellentyps mit der passenden Vorrichtung versehen sein, die den Empfang der Welle ermöglicht (z.B. Antenne bei elektromagnetischen Wellen; Photodetektoren oder elektrooptische Mischer bei optischen Wellen, Schallwandler bzw. Mikrophone bei akustischen Wellen).

Geht man von idealen Messwerten für die Phasenwerte aus, so müsste der Vergleich zwischen gemessenen Phasenwerten und hypothetischen Phasenwerte bei Annahme der exakten Objektposition zu einer hundertprozentigen Übereinstimmung führen, d.h. die Differenz zwischen gemessener und hypothetischer Phase müsste bei exakter zu Grunde gelegter Position des Objektes für die Berechnung der hypothetischen Phase null ergeben. Da allerdings die Messwerte durch Rauschsignale überlagert werden, kann es hier zu Abweichungen der Messwerte kommen. Zur Umgehung dieser Problematik wird in einer bevorzugten Ausführung der Erfindung vorgeschlagen, dass für den Vergleich der Linearkombinationen eine geeignete Penalty Funktion zum Einsatz kommt, um die Summe aus den sich ergebenden Abweichungen, insbesondere für jeden Einzelvergleich von Linearkombinationen zu minimieren. Dies erfolgt durch den rekursiven Schätzer/Filter. Hierbei wird gemäß dem rekursiven Vorgehen vom zuletzt bekannten Punkt des zu detektierenden Objekts ausgegangen und durch rekursives statistisches bzw. FIlterverfahren und mit Hilfe der verglichenen Phasenwerte die aktuelle Position bestimmt.

Vorstellbar ist es, in den rekursiven Schätzer/FIiter ein oder mehrere Bewegungsmodelle für das Objekt und/oder Sensorwerte, Insbesondere einer Inertialsensorik und/oder eine Dopplerauswertung für das Objekt einfliessen zu lassen.

Als geeignete Penalty Funktion für die rekursive Positionsschätzung kann beispielsweise eine quadratische Funktion (Least-Square) genutzt werden. Ein bekanntes System zur Least-Square Minimierung ist ein sogenannter Extended Kalman Filter. Der Kalman Filter geht bspw. vom letzten bekannten Zustand, d.h. der zuletzt bekannten Position des Objektes aus. Anhand des letzten bekannten Zustandes wird ein neuer Zustand vorgeschätzt, der unter Verwendung der mathematischen Zusammenhänge mit den gemessenen Phasenwerten bzw. Linearkombinationen daraus verglichen und optimiert wird. Vorstellbar ist hier auch eine Berücksichtigung etwaiger Geschwindigkeitskomponenten des Objektes und entsprechender Kovarianzen, um die Vorschätzung zu optimieren.

Gemäß bevorzugter Ausgestaltung kann für jede Linearkombination der hypothetischen und/oder gemessenen Phasenwerte ein sogenannter Kalman Gain berechnet werden, das ein Maß dafür ist, wie stark der Vorschätzung und der Messung jeweils vertraut wird. Im nächsten Schritt erfolgt dann der Vergleich von Messwerten und Zustandswerten der Vorschätzung, wobei hierfür die vorgeschätzte Position bspw. in die entsprechenden hypothetischen Phasenwerte umgerechnet und analog zum Messvektor bspw. die Differenzen für alle möglichen Linearkombinationen pro Empfänger, d.h. jede Antennenkombination, gebildet werden. Im Anschluss wird dann die erfolgte Vorschätzung der Position und optional die Kovarianz Matrix mit Hilfe der gemessenen Phasenwerte und gegebenenfalls unter Berücksichtigung des Kalman Gains korrigiert, um darauf basierend die neue Position des Objektes zu erhalten.

Um eine Korrektur symmetrisch in alle Richtungen zu ermöglichen, werden die entsprechenden Phasen mit Hilfe einer Modulo Operation auf einen spezifischen Werteraum abgebildet.

Für den ersten Messpunkt, d.h. ohne vorbekannten Positionswert, kann bspw. ein initialer Startwert angenommen werden. Denkbar ist es ebenfalls, einen initialen Startwert basierend auf einem anderen Ortungsverfahren auszuwählen oder gleichzeitig von vielen Startpunkten zu starten und dann die beste Lösung zu wählen.

Alternativ zum Einsatz eines Extended Kalman Filters für die rekursive Positionsschätzung kann ebenfalls ein Pseudo-Linearfilter eingesetzt werden. Auch besteht die Möglichkeit die rekursive Positionsschätzung auf Grundlage einer gradientenbasierten Suche oder auch einer Brute Force Suche auszuführen.

Denkbar ist es ebenfalls, dass das Verfahren iterativ für eine zu schätzende Position ausgeführt wird, indem das Verfahren mehrmals hintereinander für einen einzigen Messpunkt ausgeführt wird, um sich so der besten Schätzung der Position immer weiter anzunähern.

Das erfindungsgemäße Verfahren Ist Insbesondere für alle wellenbasierten Sensoren einsetzbar, bei denen ein Bezug zwischen Abstand zwischen Sender und Empfänger als auch Phase besteht. Hierbei spielt es keine Rolle, ob es sich um kohärente Signale (z. B. durch die reine Reflektion bei Sekundärradar) oder auch um inkohärente Signale handelt (z. B. Primärradar, nach dem LPR-Prinzip oder Funkbojen).

Das erfindungsgemäße Verfahren Ist insbesondere im Nahfeld von Antennenanordnungen (Anordnungen von Antennen, die zueinander einen stabilen Phasenbezug haben und deren Phasen somit zueinander ausgewertet werden können) einsetzbar. Dabei Ist das Nahfeld hierbei definiert als der Bereich in der Nähe der Antennenanordnung, in dem eine vom Objekt emittierte Kugelwelle nicht über der gesamten geometrischen Ausbreitung einer Antennenanordnung als ebene Welle angenähert werden kann. Das Nahfeld wird in der Literatur oft als Fresnel-Region bezeichnet, in dem die Fresnel-Näherung, jedoch nicht die Fraunhofer-Näherung, gilt. Das Fernfeld wird oft als Fraunhofer-Region bezeichnet. Hier gilt die Fraunhofer-Näherung.

Das Verfahren lässt sich vorzugsweise auch für die Ortung von emittierenden Objekten einsetzen, deren Signal in keinem deterministischen Frequenz- und Phasenbezug zu einem Vergleichssignal in einer Empfängereinheit steht, d.h. das Sende-Trägersignal ist In der Regel nicht kohärent zu den Empfänger-Trägersignalen, weshalb die empfangenen Signalphasen aufgrund dieser Inkohärenz zunächst kelnen Rückschluss auf die Entfernung zwischen Sender und Empfänger zulassen.

Geht man aber vorzugsweise davon aus, dass es nur einen konstanten Phasenoff set und/oder einen Frequenzoffset, d.h. einen sich linear ändernden Phasenoffset und/oder einen anderen deterministischen zeitabhängigen Phasenzusammenhang zwischen dem Sende- Trägersignal und den Empfänger-Trägersignalen gibt, ist es in vorteilhafter Weise möglich, diesen Determinismus mit einer Erweiterung des erfindungsgemäßen Verfahrens ebenfalls mitzuschätzen und damit die Ortung zu verbessern . Für Systeme, deren Sende- und Empfangssignal inkohärent sind, der Phasenunterschied zwischen Sender und Empfänger $\Phi_s$ für Messungen zu unterschiedlichen Zeitpunkten aber korreliert, ist es vorteilhaft, diesen mitzuschätzen. Werden mehrere, zueinander inkohärente Funkempfänger genutzt, entsteht für jede Station ein eigener unbekannter Phasenterm $\Phi_{s,np}$.

Neben dem erfindungsgemäßen Verfahren betrifft die vorliegende Erfindung zudem ein Ortungssystem bestehend aus wenigstens einem Empfänger für die Positionsortung wenigstens eines Objektes, wobei der Empfänger Mittel zur Durchführung des Verfahrens gemäß der vorliegenden Erfindung aufweist. Offensichtlich zeichnet sich das Ortungssystem demnach durch dieselben Vorteile und Eigenschaften aus, wie sie bereits vorstehend anhand des erfindungsgemäßen Verfahrens aufgezeigt wurden. Eine wiederholende Beschreibung ist demnach nicht notwendig.

An dieser Stelle wird darauf hingewiesen, dass die Begriffe "ein" und "eine" nicht zwingend auf genau eines der Elemente verweisen, wenngleich dies eine mögliche Ausführung darstellt, sondern auch eine Mehrzahl der Elemente bezeichnen können. Ebenso schließt die Verwendung des Plurals auch das Vorhandensein des fraglichen Elementes in der Einzahl ein und umgekehrt umfasst der Singular auch mehrere der fraglichen Elemente.

Vorzugsweise ist die Wellenlänge des oder der wellenbaslerten Signale kleiner als die maximale Distanz zweier Punkte innerhalb des Raumes, in dem das zu ortende Objekt lokalisiert werden soll. Von Vorteil Ist es weiterhin, wenn die maximale Distanz zweier Punkte innerhalb des Raumes, in dem das zu ortende Objekt lokalisiert werden soll, größer ist als der größte Eindeutigkeitsbereich, der sich durch die LInearkombinationen ergibt, welche durch den rekursiven Filter/Schätzer ausgewertet werden.

Weitere Vorteile und Eigenschaften des Verfahrens sollen anhand einzelner Ausführungsbeispiele näher erläutert werden. Es zeigen:

Figur 1: Eine Messsituation mit einem beweglichen Objekt 1 an der Position P(k) und N Empfängern bzw. Messpunkten,

Figur 2: ein Blockdiagramm zur Verdeutlichung des erfindungsgemäßen Verfahrensablaufs für die rekursive Ermittlung der Position eines Objektes anhand eines Vergleichs von Phasenwerten,

Figur 3: eine Darstellung von Messsignalen unterschiedlicher Frequenz für einen Empfänger,

Figur 4: ein Blockdiagramm für die rekursive Positionsschätzung mit Hilfe eines Kalman Filters.

Im Folgenden soll zunächst auf ein paar Grundlage der Positionserkennung eingegangen werden, die unter anderem für die klassische Multiangulation relevant sind. Diese Grundlagen bilden teilweise auch die Basis für die Darstellung der erfindungsgemäßen Idee.

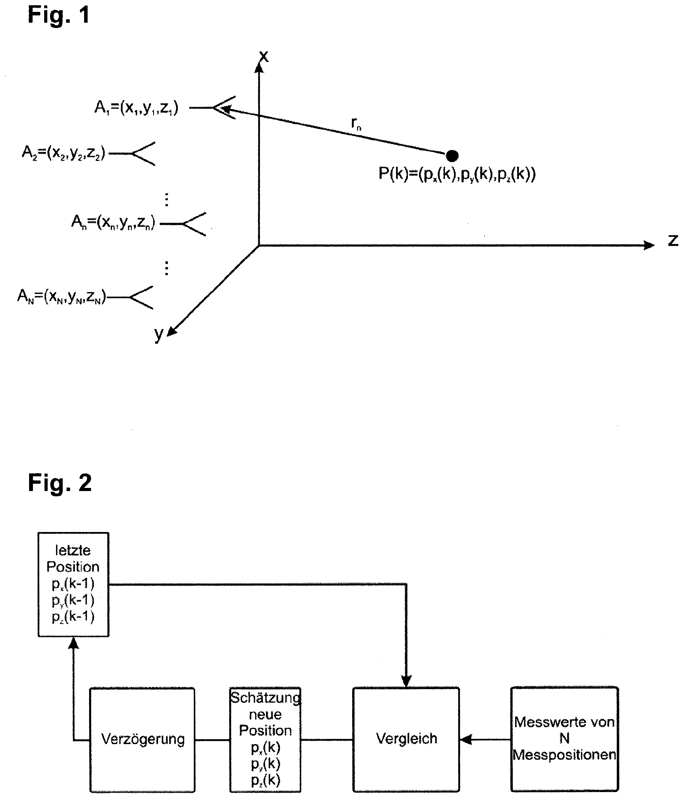

Eine mögliche Aufnahmesituation für die Messdaten ist in Fig. 1 dargestellt. *Es soll die Position P(k) des beweglichen Objektes 1 zum Zeitpunkt k erfasst werden. Dazu werden N Sensoren bzw. Messpunkte verwendet.*

Die Datenaufnahme erfolgt derart, dass zum Zeitpunkt k vom Punkt *P(k)* aus ein Signal in Richtung der Antennen $A_n$ emittiert wird. Die Emission des Signals kann dadurch hervorgerufen werden, dass das Objekt am Ort *P(k)* eine anderswo abgestrahlte Welle streut bzw. reflektiert (bspw. kann die Welle originär von einer der Antennen $A_n$ abgestrahlt worden sein), oder dadurch, dass sich am Ort *P(k)* eine Funk-Sendevorrichtung befindet, oder dadurch, dass das Objekt von sich aus - z.B. eine Wärmestrahlung bzw. eine Radio-Emission - eine Welle abstrahlt.

Das emittierte Signal wird an den $N$ Messpositionen $A_n = (x_n, y_n, z_n)$ mit $n = 1,2 \ldots , N$ empfangen. Die zu bestimmende Position eines Objektes sei $P(k) = (p_x(k), p_y(k), p_z(k))$.

Für eine kompaktere Darstellung wird von folgenden Vereinfachungen ausgegangen:

- Das Objekt hält sich innerhalb eines Raumbereichs auf, der so gewählt ist, dass das Signal vom Objekt von allen Positionen $A_n$ aus erfasst werden kann.
- Das Verhalten der Antennen sei gleichförmig und richtungsunabhängig, bzw. es wurde eine Kalibration durchgeführt um ein nichtgleichförmiges und richtungsabhängiges Verhalten mit geeigneten Verfahren kompensieren zu können
- Der Übertragungskanal wird zunächst vereinfacht als idealer AWGN-Kanal angenommen, sprich das Empfangssignal ergibt sich als amplitudengewichtete und zeitverzögerte Version des Signals, das vom Objekt ausgeht. Die dem Kanal überlagerten Störungen $n(t)$ sollen als additives weißes gaußsches Rauschen modelliert werden.

Die genannten Vereinfachungen sind für die Funktionsweise des erfinderischen Verfahrens nicht entscheidend, sondern dienen der Übersichtlichkeit der Darstellung. Das empfange Signal an der Antenne $n$ lässt sich unter diesen Annahmen ausdrücken als

$$e_n(t) = \alpha_n \cdot s(t - \tau_n) + n(t),$$

mit:

$\alpha_n$ sei die für den Messweg von $A_n$ zu $P(k)$ charakteristische Dämpfungskonstante

$\tau_n$ sei die für den direkten Weg von $P(k)$ zur Antennenposition $A_n$ charakteristische Signallaufzeit (d.h. die Signallaufzeit des kürzesten Wegs, auch als Line of Sight - LOS bezeichnet)

$s(t - \tau_n)$ sei das Signal was vom Objekt ausgeht und durch den Weg zwischen Objekt und Empfänger um $\tau_n$ verzögert ist

Transformiert man die Gleichung in den Frequenzbereich, so ergibt sich

$$E_n(\omega) = \alpha_n \cdot S(\omega) \cdot e^{-i\omega\tau_n} + N(\omega).$$

Die Laufzeit vom Punkt $P(k)$ zu einer Antennenposition $A_n$ berechnet sich gemäß:

$$\tau_n(k) = \frac{r_n(k)}{c} \text{ mit } r_n(k) = \sqrt{(p_x(k) - x_n)^2 + \left(p_y(k) - y_n\right)^2 + (p_z(k) - z_n)^2},$$

wobei $c$ die Ausbreitungsgeschwindigkeit der Welle ist.

Die Phase des empfangenen Signals setzt sich zusammen aus dem Term $e^{-i\omega\tau_n}$, der abhängig ist vom Abstand zwischen Objekt und der Antenne n und einem Anteil durch das Signal, das vom Objekt ausgeht $S(\omega)$. Drückt man das Signal aus durch:

$$S(\omega) = \alpha_S \cdot e^{-j\Phi_S},$$

wobei $\alpha_S$ die Amplitude und $\Phi_S$ die Phase des vom Objekt ausgehenden Signals Ist, dann ergibt sich die Empfangsphase an Antenne n zu:

$$\varphi_n = \text{mod'}_{2\pi}(-\omega\tau_n - \Phi_s),$$

wobei $\text{mod'}_{2\pi}(\varphi)$ die Phase $\varphi$ auf $[-\pi, \pi]$ abbildet, also

$$\text{mod'}_{2\pi}(\varphi) = \begin{cases} \text{mod}_{2\pi}(\varphi) & \text{für } \text{mod}_{2\pi}(\varphi) < \pi \\ \text{mod}_{2\pi}(\varphi) - 2\pi & \text{für } \text{mod}_{2\pi}(\varphi) > \pi \end{cases}.$$

Dabei kann $\Phi_s$ bekannt sein, z.B. wenn das Radar sendet und das Objekt lediglich reflektiert oder das Objekt eine kohärente Antwort sendet. Es kann aber auch sein das dieser Phasenterm unbekannt ist, z.B. wenn es sich um einen aktiven Transponder mit einem eigenen Lokaloszillator (dessen Phase nicht bekannt ist) handelt oder ein asynchron sendender Beacon als Sender dient.

Erfindungsgemäß wird nun ein Verfahren vorgeschlagen, mit dem wie In Fig. 2 zu sehen ist, die aktuelle Position $P(k)$ direkt aus der letzten Position und den gemessenen Phasenwerten geschätzt werden kann, ohne dass eine vorherige Berechnung/Schätzung des Einfallswinkels, bspw. wie bei der Multlangulation, erforderlich ist.

Das Verfahren wird nun zunächst anhand eines Funkempfängers mit $N$ Antennen erläutert, lässt sich aber leicht auf Systeme mit mehreren Radaren, wobei jeder Funkempfänger eine beliebige Anzahl Antennen haben kann, erweitern. Das Objekt sendet nun wie zuvor ein Signal, das mithilfe der $N$ Antennen empfangen wird, so dass in dem Radarmesssystem nun $N$ zueinander kohärente Empfangssignale vorliegen. Hierbei gelten Empfangssignale als kohärent zueinander, wenn diese einen stabilen Phasenbezug zueinander beibehalten. Bei Verwendung von $N_R$ Radaren liegen entsprechend $N_R$ Sätze an zueinander kohärenten Antworten vor, bei einem kohärent antwortenden Objekt sind alle Empfangssignale aller Radare zueinander kohärent.

Wie schon im Stand der Technik erwähnt, ist die Phase $\varphi_n$ einer elektromagnetischen Welle abhängig von der Laufzeit ($\varphi_n = \text{mod'}_{2\pi}(-\omega\tau_n - \Phi_s)$) und damit vom Abstand ($\tau_n \sim \tau_n$) vom Objekt zur Antenne und dem Phasenbeitrag $\Phi_s$ durch das Signal was vom Objekt ausgeht (z.B. Sendesignal oder Reflektion am Objekt). Hierbei ist die Phase aber nur innerhalb einer Wellenlänge eindeutig. Um das Problem der Vieldeutigkeit zu umgehen, wird die letzte Position ($p_x(k - 1),p_y(k - 1),p_z(k -1)$) des Objekts oder die letzten Positionen oder eine Vorschätzung der neuen Position miteinbezogen.

Um nun die neue Position ($p_x(k),p_y(k),p_z(k)$) zu schätzen wird an $N_R$ Funkempfängern jeweils ein Satz an $N$ Phasenwerten $\varphi_1,\varphi_2,...,\varphi_N$ aufgenommen. Hieraus können nun beliebige Linearkombinationen der Phasen mit den hypothetischen sich aus den Sender-Empfänger Abständen ergebenden Phasen verglichen werden. Hierzu werden $N_L$ Linearkombinationen aus den gemessenen Phasenwerten

$$b_{1,n_l}\varphi_1 + b_{2,n_l}\varphi_2 + \cdots + b_{N,n_l}\varphi_N$$

gebildet und werden mit den Linearkombinationen der zugehörigen hypothetischen Phasen verglichen, die durch die Sender-Empfänger Abstände und dem Phasenterm $\Phi_s$ des sendenden Objektes bestimmt werden zu

$$b_{1,n_l}\cdot\text{mod'}_{2\pi}\left(-\omega\frac{\sqrt{(p_x(k) - x_1)^2 + \left(p_y(k) - y_1\right)^2 + (p_z(k) - z_1)^2}}{c} - \Phi_s\right)$$

$$+b_{2,n_l}\cdot\text{mod'}_{2\pi}\left(-\omega\frac{\sqrt{(p_x(k) - x_2)^2 + \left(p_y(k) - y_2\right)^2 + (p_z(k) - z_2)^2}}{c} - \Phi_s\right) + \cdots$$

$$+b_{N,n_l}\cdot\text{mod'}_{2\pi}\left(-\omega\frac{\sqrt{(p_x(k) - x_N)^2 + \left(p_y(k) - y_N\right)^2 + (p_z(k) - z_N)^2}}{c} - \Phi_s\right).$$

Dabei entsprechen $b_{n,n_l} \in \mathbb{R}$ den beliebig wählbaren Vorfaktoren des $n$-ten Phasenwertes in der $n_l$-ten Linearkombination. Diese können demzufolge jeden Wert inklusive der Null annehmen. Es ist leicht ersichtlich, das die Vorfaktoren für die Linearkombination der Phasen und die Linearkombination der hypothetischen Phasen identisch sein müssen. Die Modulo Operation $\text{mod'}_{2\pi}$ ermöglicht einen Vergleich mit den gemessenen Phasenwerten, da diese vieldeutig sind. Die Operation kann durch jede Operation ersetzt werden, die die gemessenen und die zughörigen hypothetischen Phasenwerte auf den gleichen Zahlenbereich abbildet, sodass die gemessenen und hypothetischen Werte vergleichbar sind. Anstatt Phasenwerten miteinander zu vergleichen, können natürlich auch die zugehörigen Abstände, Zeitverzögerungen etc. miteinander verglichen werden.

Allgemein formuliert lässt sich nun die Beziehung zwischen den fehlerfrei gemessenen Phasen und einer hypothetischen Position für eine Linearkombination $n_l$ angeben als

$$\sum_{n=1}^{N} b_{n,n_l} \text{mod'}_{2\pi}(\varphi_n)$$

$$= \sum_{n=1}^{N} b_{n,n_l} \text{mod'}_{2\pi} \left( -\omega \frac{\sqrt{(p_x(k)-x_n)^2 + (p_y(k)-y_n)^2 + (p_z(k)-z_n)^2}}{c} - \Phi_s \right). \quad (1)$$

Der linke Teil beinhaltet dabei die Linearkombinationen aus den gemessenen Phasenwerten, wobei der rechte Teil die zugehörigen hypothetischen, sich durch die Sender-Empfänger Abstände ergebenden, Linearkombinationen der Phasen darstellt. Dabei wird auch die Sendephase $\Phi_s$ miteinbezogen, die, je nachdem von welcher Art Objekt (z.B. Transponder, passive Reflektion, etc.) das Wellenfeld ausgeht, unbekannt sein kann.

Wäre die Messung der Phasenwerte $\varphi_n$ fehlerfrei, könnte nun der Punkt gefunden werden, an dem die Differenz der beiden Seiten von Gleichung (1) Null ergibt. Da die Messungen der Phasen $\varphi_n$ im Allgemeinen verrauscht sind, müssen die gewählten Linearkombinationen mithilfe einer geeigneten Penalty-Funktion Pe($\cdot$) ausgewertet werden, siehe "Convex Optimization", Seiten 294-300, von Boyd S. und Vandenberghe L.. Um nun den Ort $(p_x(k), p_y(k), p_z(k))$ zu schätzen wird dieser so gewählt, dass die Summe der Penalty-Funktionen für alle Linearkombinationen minimiert wird:

$$\min_{p_x(k), p_y(k), p_z(k), \Phi_s} \sum_{n_l=1}^{N_l} \text{Pe} \left( \text{mod'}_{2\pi} \sum_{n=1}^{N} \left( b_{n,n_l} \varphi_n - \right. \right.$$

$$\left. \left. b_{n,n_l} \left| -\omega \frac{\sqrt{(p_x(k)-x_n)^2 + (p_y(k)-y_n)^2 + (p_z(k)-z_n)^2}}{c} - \Phi_s \right| \right) \right). \quad (2)$$

In der Optimierungsfunktion sorgt die Modulo Operation mod'$_{2\pi}(\cdot)$ vor der Subtraktion der Linearkombinationen dafür, dass das zu ortende Objekt gleichmäßig in alle Richtungen um den letzten Ort $(p_x(k-1), p_y(k-1), p_z(k-1))$ verschoben werden kann. Hierbei muss auch der unbekannte Phasenterm $\Phi_s$ mit geschätzt oder durch geschickte Wahl der Vorfaktoren $b_{n,n_l}$ herausgekürzt werden. Dabei kann es nützlich sein, den unbekannten Phasenterm $\Phi_s$ mitzuschätzen. Beispielsweise kann $\Phi_s$ durch die Sendephase des zu ortenden Objektes entstehen. Falls diese sich nur langsam ändert oder ein anderer bekannter Zusammenhang existiert, lässt sich dieser zu Erhöhung der Ortungsgenauigkeit nutzen. Die zu minimierende Funktion kann dabei aus der Summe der Penalties beliebig vieler Linearkombinationen entstehen. Dem Fachmann ist bekannt, dass die Minimierungsfunktion nach Belieben verändert werden kann, um eine effiziente Auswertung zu ermöglichen. So kann abhängig von den Faktoren $b_{1,n_l}, b_{2,n_l}, ..., b_{N,n_l} \in \mathbb{R}$ die Modulo Operation an unterschiedlichen Stellen erfolgen. Desweitem ist die Auswertung der Summen linear und kann daher in beliebiger Reihenfolge durchgeführt werden.

Dem Fachmann ist allgemein bekannt, dass Summen und Differenzen von Phasenwerten auch mittels Multiplikationen bzw. Divisionen von komplexen Zahlen gebildet werden können. Insbesondere kann es vorteilhaft sein, Summen und Differenzen von Phasenwerten $\varphi_n$ dadurch zu berechnen indem empfangene Signale $e_n(t)$ miteinander multipliziert oder konjugiert komplex multipliziert werden bzw. empfangenen Signale gemäß $e_n(t) = |e_n(t)| * \exp(j \cdot \arg\{e_n(t)\})$ In einen Betrags- und Phasenanteil zerlegt werden und nur die Phasenanteile des komplexen Signals, also $\exp(j \cdot \arg\{e_n(t)\})$, miteinander multipliziert oder konjugiert komplex multipliziert oder dividiert werden. Nach der zuvor beschrieben Operation kann für jeden Zeitpunkt t ein Phasenwert bzw. Summen und/oder Differenzen von Phasenwerten bestimmt werden. Um die aktuelle Position $P(k)$ der Wellenquelle zu bestimmen, wird nun in der Umgebung einer aus einer zurückliegenden Messung bestimmten Position, bevorzugt In der Umgebung der der letzten Position eine Suche nach der aktuellen Position in der Art vorgenommen, dass der Punkt gefunden wird an dem die Penalty nach Zusammenhang (2) minimal wird. Da die Messung von Störgrößen überlagert wird, kann die Summe der Penalty Funktionen mithilfe von z.B. einer Least-Square Suche, Gradientenverfahren, Brute Force Verfahren, etc. minimiert werden.

Die hier vorgestellte Methode zeichnet sich insbesondere dadurch aus, dass diese einfach um beliebige weitere Kriterien erweitert werden kann, z.B. indem Gleichung (2) um eine Penalty Funktion erweitert wird, die das Kriterium miteinbezieht. So können die Kombination mit Bewegungsmodellen, die Fusion mit anderen Sensoren, oder Dopplerauswertungen, etc. in die Penalty Funktion miteinbezogen werden. Alternativ ist auch eine der Positionsschätzung nachfolgende Filterung möglich. Des Weiteren kann die Penalty Funktion auch bei mehreren Frequenzen ausgewertet werden.

Die Vorfaktoren für die jeweiligen Linearkombinationen können dabei wie schon erwähnt zunächst beliebig gewählt werden, jedoch sei an dieser Stelle für die beiden auftretenden Fälle (Objekt sendet inkohärent oder kohärent zum Empfänger) auf eine geeignete Wahl eingegangen.

Für kohärente Systeme ist der Phasenterm $\Phi_s$ bekannt und daher kann die Beziehung aus (1) so aufgestellt werden, dass lediglich ein Vorfaktor $b_{n,n_l}$ einen Wert ungleich Null annimmt, sprich die Summe entfällt komplett.

$$b_{n,n_l} \cdot \text{mod}'_{2\pi}\left(\varphi_{n,koh}\right) = b_{n,n_l} \cdot \text{mod}'_{2\pi}\left(-\omega \frac{r_n}{c} - \Phi_s\right).$$

$$\text{mit } r_n = \sqrt{(p_x(k) - x_n)^2 + \left(p_y(k) - y_n\right)^2 + (p_z(k) - z_n)^2}.$$

Dadurch ergeben sich genau $N$ unabhängige Linearkombinationen mit der Fehlerfunktion

$$\min_{p_x(k),p_y(k),p_z(k)} \sum_{n_l=1}^{N} \text{Pe}\left( \text{mod}'_{2\pi}\left( b_{n,n_l}\varphi_n - b_{n,n_l}\left[-\omega \frac{\sqrt{(p_x(k)-x_n)^2+\left(p_y(k)-y_n\right)^2+(p_z(k)-z_n)^2}}{c} - \Phi_s\right]\right)\right).$$

Ein geeigneter Anwendungsfall wären beispielsweise Systeme bei denen die Kohärenz erreicht wird, indem das Objekt das Signal reflektiert bzw. ohne Verzögerung ein kohärentes Signal aussendet. Bei diesen sogenannten "Round-Trip Time of Flight" Messungen legt das Signal die Strecke vom Sender zum Objekt und anschließend zum Empfänger zurück, wodurch sich der Phasenterm $\Phi_s$ aus der Laufzeit der Sendeantenne zum Objekt ergibt. Dabei muss die Sendeantenne nicht separat sein (bistatisch) sondern kann auch der Empfangsantenne entsprechen (monostatisch).

Für Systeme, bei denen Sende- und Empfangssignal inkohärent sind, ist es sinnvoll jeweils die Differenz für zwei kohärente Empfangskanäle zu bilden, so dass der unbekannte Phasenterm $\Phi_s$ sich herauskürzt. Dies wird erreicht indem die Linearkombinationen so gebildet werden, dass je Linearkombination zwei Vorfaktoren $b_{n,n_l} = -b_{m,n_l}$ ungleich Null gewählt werden:

$$b_{n,n_l} \cdot \text{mod}'_{2\pi}(\varphi_n) - b_{n,n_l} \cdot \text{mod}'_{2\pi}(\varphi_m)$$
$$= b_{n,n_l} \cdot \text{mod}'_{2\pi}\left(-\omega \frac{r_n}{c}\right) - b_{n,n_l} \cdot \text{mod}'_{2\pi}\left(-\omega \frac{r_m}{c}\right),$$

$$\text{mit } r_n = \sqrt{(p_x(k) - x_n)^2 + \left(p_y(k) - y_n\right)^2 + (p_z(k) - z_n)^2}.$$

Dann ergibt sich die Fehlerfunktion zu

$$\min_{p_x(k),p_y(k),p_z(k)} \sum_{n_l=1}^{N_l} \text{Pe}\left( \text{mod'}_{2\pi}\left( b_{n,n_l}\varphi_n - \right.\right.$$

$$b_{n,n_l}\left[ -\omega \frac{\sqrt{(p_x(k)-x_n)^2+(p_y(k)-y_n)^2+(p_z(k)-z_n)^2}}{c} \right] - b_{n,n_l}\varphi_n +$$

$$\left.\left. b_{n,n_l}\left[ -\omega \frac{\sqrt{(p_x(k)-x_m)^2+(p_y(k)-y_m)^2+(p_z(k)-z_m)^2}}{c} \right] \right)\right)$$

Durch diese geschickte Summenbildung spart man sich die explizite Berechnung/Schätzung der unbekannten Phase und spart damit Rechenleistung ein. Es wäre alternativ möglich, die Phasenterme $\Phi_s$ für jeden Messpunkt mit-zuschätzen. Auch für kohärente Systeme können die Phasendifferenzen von Antennenpaaren ausgewertet werden um z.B. den Eindeutigkeitsbereich bzgl. der Phase zu erhöhen.

Für den Fachmann ist leicht nachvollziehbar, dass abseits dieser beiden Empfehlung alle möglichen Kombinationen bei der Summenbildung möglich sind bei denen mindestens zwei (2D Positionsschätzung) bzw. drei (3D Positionsschätzung) Penalty Funktionen gebildet werden können, sodass das sich ergebende Gleichungssystem vollständig bestimmt ist.

Vorteile des erfindungsgemäßen Verfahrens:

- Das Rauschen auf den Phasen kann als gaußverteilt angenommen werden, weshalb typische Metriken(z.B. Least-Square) von effizienten Filtem(z.B. Kalman Filter) dem optimalen Schätzer entsprechen
- Die Phase reagiert äußerst sensitiv auf Änderungen im Abstand, somit können hohe Genauigkeiten erzielt werden
- Durch die Anpassung der Antennenabstände (bei gleichbleibender Messrate) lassen sich Sensitivität und Eindeutigkeitsbereich auf das Messszenario abstimmen
- Da das System keine ebenen Wellen erwartet, kann es im Nahfeld der Antennenanordnungen arbeiten
- Sowohl für kohärente als auch für inkohärente Signale vom Objekt auswertbar
- Direkte Positionsschätzung aus den Phasen, kein rechenaufwändiger Umweg über die Berechnung eines Beamformers
- Die Phasenwerte können einzeln gewichtet werden um Fehlmessungen bzw. schlechterem SNR auf einzelnen Kanälen Rechnung zu tragen
- Wenn das System im Nahfeld der Antennenanordnungen arbeitet und damit keine ebenen Wellen erwartet, erhöht sich die Robustheit gegenüber Mehrwegeausbreitung stark, da diese nun zufällige anstatt struktureller Fehlmessungen bewirkt

Das obige Verfahren wurde hier anhand von mehreren Empfangskanälen (Antennen) an einer Radarstation demonstriert. Es ist für den Fachmann leicht nachvollziehbar, dass es auch möglich ist, eine oder mehrere Empfangskanäle an unterschiedlichen Radarstationen und/oder zu unterschiedlichen Zeitpunkten zu nutzen. Hierbei ergeben sich analog zum vorgestellten Vorgehen die Phasen-Abstands-Beziehungen aufgrund der unterschiedlichen Laufzeiten zu den jeweiligen Empfängerpositionen.

Zusätzlich lässt sich, wenn sich für unterschiedliche Zeitpunkte eine Phasenbeziehung aufstellen lässt, z.B. wenn vom Objekt kontinuierlich ein Wellenfeld ausgeht, auch die Phasendifferenz zwischen zwei Zeitpunkten nutzen. Aus dieser Änderung der Empfangsphase lässt sich dann beispielsweise eine Dopplerverschiebung und damit die Geschwindigkeit ableiten.

Die hier vorgestellte Erfindung wurde mit gemessenen Phasen an unterschiedlichen Empfängern vorgestellt. Äquivalent lässt sich das exakt gleiche Prinzip auf gemessene Phasen an unterschiedlichen Frequenzen des gleichen Empfängers oder beliebigen Frequenz/Empfänger Kombinationen umsetzen.

Um dies zu zeigen wird wieder die Formel der Empfangsphase an Antenne $n$ bei Kreisfrequenz $\omega_m = 2\pi f_m$

$$\varphi_{n,m} = \text{mod'}_{2\pi}(-\omega_m\tau_n - \Phi_s).$$

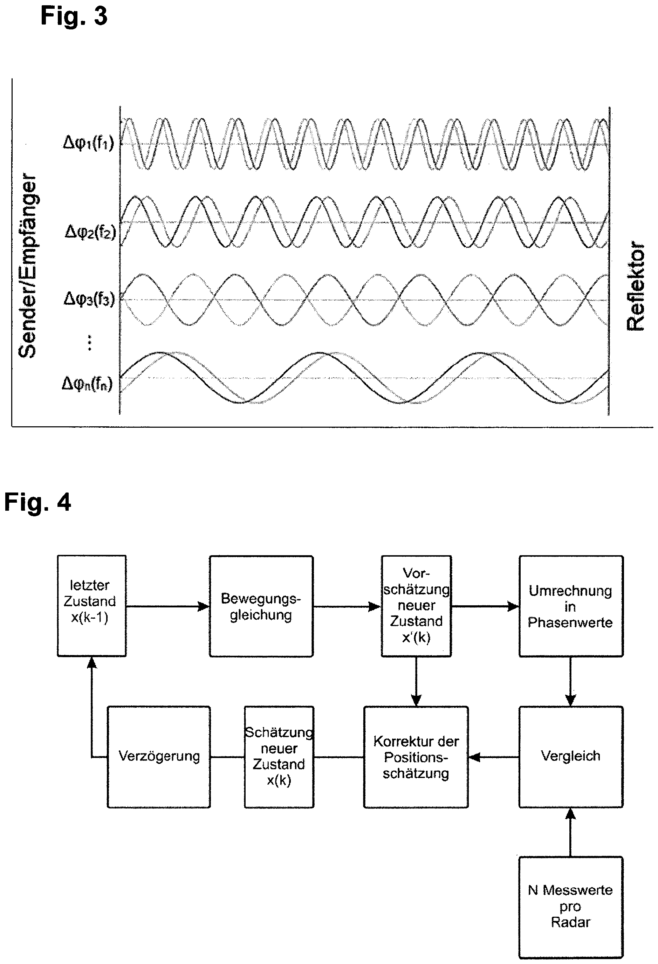

herangezogen. Es ist zu sehen, dass, bei gleichbleibendem Abstand und damit gleichbleibender Verzögerung $\tau_n$, die gemessene Phase in abhängig der Kreisfrequenz $\omega_m = 2\pi f_m$ variiert. Dies ist in Fig. 3 dargestellt. Folglich können in Gleichung (2) auch gemessene Phasen bei unterschiedlichen Frequenzen genutzt werden. Weiterhin können auch Phasen unterschiedlicher Frequenz an unterschiedlichen Antennen genutzt werden.

Die Messung der Phasen an unterschiedlichen Frequenzen lässt sich auf eine Vielzahl bereits bestehender Systeme anwenden. Dazu zählen alle Mehrträgerverfahren wie Orthogonal Frequency Division Multiplexing (OFDM), Discrete Multitone (DMT), Multi-Continuous Wave (Multi-CW) und Frequency Shift Keying (FSK) oder Minimum Shift Keying (MSK) Systeme, bei denen einzelne CW Signale bei unterschiedlichen Frequenzen versendet werden. Dabei können in bestehender Infrastruktur wie Kommunikationssystemen bereits die Information der Kanalschätzung zur Ortung herangezogen werden. So können z.B. in Massive MIMO Systemen die Phasen unterschiedlicher Frequenzen und an unterschiedlichen Antennen der bereits erfolgten Kanalschätzung genutzt werden, um Mobilfunkteilnehmer zu orten. Auch die Phasen mehrerer Kommunikationsvorgänge auf unterschiedlichen Frequenzen (z.B. WLAN im 2,4GHz Band und im 5 GHz Band) können zueinander ausgewertet werden. Des Weiteren können die Phasen der Ausgangssignale von Filterbänken zur Ortung herangezogen werden.

Eine weitere Anwendungsmöglichkeit stellen sogenannten "Harmonic Radar" Systeme dar. Dabei wird von einem Sender bei einer oder mehreren Frequenzen ein Signal emittiert. Dieses wird von einem zu lokalisierenden Objekt reflektiert oder von einem Transponder als zu lokalisierendes Objekt empfangen, das nichtlineares Verhalten aufweist. Durch diese Nichtlinearität findet ein Misch- oder Vervielfachungsprozess statt, durch den Signalanteile bei anderen Frequenzen als der Sendefrequenz entstehen:

- Geht man bspw. von einem Sender aus, der eine Frequenz (f0) aussendet, entstehen durch die nichtlineare Kennlinie Signalanteile bei Vielfachen der Sendefrequenz (n*f0).

- Geht man stattdessen von einem Sender aus, der mehrere Frequenzen (f1,f2,f3...fn) aussendet, entstehen die Vielfachen dieser Frequenzen (n1*f1; n2*f2; n3*f3;....; nn*fn) sowie Intermodulationsprodukte (n1*f1+n2*f2+...+nn*fn, wobei n1,...,nn ganze Zahlen (-∞,...-1,0,1,...,∞) sind und nicht identisch sein müssen ). Hierbei sind auch Hybridsysteme möglich, bei dem die Frequenzen (f1,f2,f3...fm) gesendet werden und (fm+1,...,fn) am Transponder des Objektes selbst erzeugt werden, aus denen entsprechend Misch- und Intermodulationsprodukte entstehen.

Vom zu lokalisierenden Objekt bzw. dessen Transponder geht nun ein Wellenfeld mit Signalanteilen bei den generierten Frequenzen aus. Dieses wird vom Empfänger gemessen und Phasenwerte bei diesen Frequenzen bestimmt.
Die Phasen bei diesen unterschiedlichen Frequenzen weisen wiederrum einen festen, abstandsabhängigen Phasenbezug zueinander, und im kohärenten Fall auch zum Sender, auf. Daher kann das erfindungsgemäße Verfahren für die Auswertung der Phasen genutzt werden. Auch ist es möglich, Phasen unterschiedlicher Frequenzen an unterschiedlichen Antennen und/oder Zeitpunkten zu nutzen.
Im Folgenden soll nun ein Fall dargestellt werden, anhand dessen das Verfahren entwickelt, erprobt und verifiziert wurde. Der Messaufbau besteht aus U (mit u = {1, 2, ..., U} FMCW-Sekundärradaren mit jeweils N (mit n={1,2,...,N} Antennen und einem Transponder der Inkohärent auf die Signale der Radargeräte antwortet. Die Demodulation der N empfangenen Signale einer Station erfolgt mittels einem Lokaloszillator, sprich kohärent zueinander, alle ungewollten Phasenversätze die sich durch Kabel, etc. ergeben, wurden durch eine Kalibration ermittelt und herausgerechnet Für das Basisbandsignal in einem Empfangskanal des FMCW-Radars gilt daher:

$$s_{RXu,n} = A_{RX,u,n} \cdot \cos\left(2\pi\mu\tau_{LOS,u,n}t + 2\pi f_0\tau_{LOS,u,n} + \phi\right).$$

Mit:

$A_{RX,p,n}$: Amplitude des Basisbandsignals (empfangen von Antenne Nr. $n$ im Radar Nr. $u$)
$\mu$: Sweeprate (bei einem FMCW-Radar wie dem Fachmann bekannt definiert als Sweepbandbreite / Sweepdauer)
$\tau_{LOS,u,n}$: Laufzeit für den direkten Weg vom Transponder zur Antenne Nr. $n$ im Radar Nr. $u$ (Line of Sight)
$f_0$: Trägerfrequenz des Radars (hier 24GHz)
$\phi$: unbekannter Phasenterm (verursacht z.B. durch die unbekannte Oszillatorphase im Transponder, Laufzeiten im Transponder, etc), der für alle Kanäle eines Radars identisch ist

Für die Phase an einer Antenne n im Radar u gilt daher

$$\varphi_{u,n} = 2\pi f_0 \tau_{LOS,u,n} + \phi.$$

Nachdem der Phasenterm $\phi$ In diesem Fall nicht bekannt ist werden die Paare für den Vergleich gebildet, indem die Phasenwerte für jeweils zwei Antennen (Index $n,m \in \{1,..,N\}$ mit $n \neq m$) voneinander abgezogen werden:

$$\varphi_{u,n} - \varphi_{u,m} \leftrightarrow r_{u,n} - r_{u,m}$$

Nun wird vorzugsweise jede mögliche Kombination gebildet, wodurch sich pro Radar, wenn dieses N Empfangsantennen aufweist, gemäß der Gaußschen Summenformel eine Anzahl von ($N \cdot (N - 1)/2$) Phasendifferenzen ($\Delta\varphi_{u,n,m} = \varphi_{u,n} - \varphi_{u,m}$) ergibt, diese werden für alle U Radare zusammen zu einem Messvektor zusammengefasst:

$$\begin{pmatrix} \Delta\varphi_{1,1,2} \\ \vdots \\ \Delta\varphi_{1,n,m} \\ \vdots \\ \Delta\varphi_{1,(N-1),N} \\ \Delta\varphi_{2,12} \\ \vdots \\ \Delta\varphi_{2,n,m} \\ \vdots \\ \Delta\varphi_{2,(N-1),N} \\ \Delta\varphi_{U,1,2} \\ \vdots \\ \Delta\varphi_{U,n,m} \\ \vdots \\ \Delta\varphi_{U,(N-1),N} \end{pmatrix}$$

Für die Berechnung der neuen Position wird nun ein Extended Kalman Filter nach Fig. 4 genutzt. Eine allgemeine Beschreibung von Extended Kalman Filter findet sich auf Seite 1-7 in "Lecture Notes Estimation II" von Reid I. und Term H. Der letzte Zustand ($x(k - 1)$), bestehend aus der Position ($p_x(k - 1), p_y(k - 1), p_z(k -1)$) und der Geschwindigkeitskomponenten ($v_x(k - 1), v_y(k - 1), v_z(k - 1)$) und die Kovarianz dazu ($P(k -1)$) sei hinreichend genau bekannt.

Im Extended Kalman Filter werden nun die folgenden Schritte durchgeführt:

Zunächst wird anhand des letzten Zustandes und einer einfachen Bewegungsgleichung eine Vorschätzung für den neuen Zustand und die Kovarianz berechnet. Dies wird auch als "predict" bezeichnet:

$$x'(k) = \begin{pmatrix} p'_x(k) \\ p'_y(k) \\ p'_z(k) \\ v'_x(k) \\ v'_y(k) \\ v'_z(k) \end{pmatrix} = F \cdot x(k-1), \text{ mit } F = \begin{pmatrix} 1 & 0 & 0 & \Delta T & 0 & 0 \\ 0 & 1 & 0 & 0 & \Delta T & 0 \\ 0 & 0 & 1 & 0 & 0 & \Delta T \\ 0 & 0 & 0 & 1 & 0 & 0 \\ 0 & 0 & 0 & 0 & 1 & 0 \\ 0 & 0 & 0 & 0 & 0 & 1 \end{pmatrix};$$

$$P'(k) = F \cdot P(k-1) \cdot F^T + Q.$$

Mit:

$\Delta T$: zeitlicher Abstand der beiden Messpunkte

$Q$: Kovarianzmatrix für die Berechnung der Vorschätzung
$x'(k)$: Zustandsvektor für die Vorschätzung des Zustandes
$x(k - 1)$: Zustandsvektor für den letzten Zustand
$F$: Matrixform der Bewegungsgleichung
$P(k - 1)$: Kovarianzmatrix des letzten Zustandes
$P'(k)$: Vorschätzung der neuen Kovarianzmatrix

Nun wird die sogenannte Jacobi-Matrix ($H(k)$) gebildet indem die Beziehungen für die Phasendifferenzen:

$$\Delta\varphi_{u,n,m} = 2\pi f_0 \left( \frac{r_{u,n} - r_{u,m}}{c} \right),$$

mit

$$r_{u,n} = \sqrt{\left(p_x(k) - x_{u,n}\right)^2 + \left(p_y(k) - y_{u,n}\right)^2 + \left(p_z(k) - z_{u,n}\right)^2},$$

nach den Einträgen des Zustandsvektors abgeleitet werden. Für die Einträge einer Zelle der Jacobi Matrix ergibt sich daher:

$$\frac{\delta\Delta\varphi_{u,n,m}(k)}{\delta p_x'(k)} \; ; \; \frac{\delta\Delta\varphi_{u,n,m}(k)}{\delta p_y'(k)} \; ; \; \frac{\delta\Delta\varphi_{u,n,m}(k)}{\delta p_z'(k)} \; ; \; \frac{\delta\Delta\varphi_{u,n,m}(k)}{\delta v_x'(k)} = 0 \; ; \; \frac{\delta\Delta\varphi_{u,n,m}(k)}{\delta v_y'(k)}$$

$$= 0 \; ; \; \frac{\delta\Delta\varphi_{u,n,m}(k)}{\delta v_z'(k)} = 0.$$

Für jede Phasendifferenz ergibt sich eine Zelle der Jacobi Matrix. Damit lautet $H(k)$ für alle $U$ Radare zusammen:

$$H(k) = \begin{bmatrix} \dfrac{\delta\Delta\varphi_{1,1,2}(k)}{\delta p_x'(k)} & \dfrac{\delta\Delta\varphi_{1,1,2}(k)}{\delta p_y'(k)} & \dfrac{\delta\Delta\varphi_{1,1,2}(k)}{\delta p_z'(k)} & 0 & 0 & 0 \\ \vdots & \vdots & \vdots & \vdots & \vdots & \vdots \\ \dfrac{\delta\Delta\varphi_{1,n,m}(k)}{\delta p_x'(k)} & \dfrac{\delta\Delta\varphi_{1,nm}(k)}{\delta p_y'(k)} & \dfrac{\delta\Delta\varphi_{1,n,m}(k)}{\delta p_z'(k)} & 0 & 0 & 0 \\ \vdots & \vdots & \vdots & \vdots & \vdots & \vdots \\ \dfrac{\delta\Delta\varphi_{1,(N-1),N}(k)}{\delta p_x'(k)} & \dfrac{\delta\Delta\varphi_{1,(N-1),N}(k)}{\delta p_y'(k)} & \dfrac{\delta\Delta\varphi_{1,(N-1),N}(k)}{\delta p_z'(k)} & 0 & 0 & 0 \\ \dfrac{\delta\Delta\varphi_{2,1,2}(k)}{\delta p_x'(k)} & \dfrac{\delta\Delta\varphi_{2,1,2}(k)}{\delta p_y'(k)} & \dfrac{\delta\Delta\varphi_{2,1,2}(k)}{\delta p_z'(k)} & 0 & 0 & 0 \\ \vdots & \vdots & \vdots & \vdots & \vdots & \vdots \\ \dfrac{\delta\Delta\varphi_{2,n,m}(k)}{\delta p_x'(k)} & \dfrac{\delta\Delta\varphi_{2,n,m}(k)}{\delta p_y'(k)} & \dfrac{\delta\Delta\varphi_{2,n,m}(k)}{\delta p_z'(k)} & 0 & 0 & 0 \\ \vdots & \vdots & \vdots & \vdots & \vdots & \vdots \\ \dfrac{\delta\Delta\varphi_{2,(N-1),N}(k)}{\delta p_x'(k)} & \dfrac{\delta\Delta\varphi_{2,(N-1),N}(k)}{\delta p_y'(k)} & \dfrac{\delta\Delta\varphi_{2,(N-1),N}(k)}{\delta p_z'(k)} & 0 & 0 & 0 \\ \vdots & \vdots & \vdots & \vdots & \vdots & \vdots \\ \dfrac{\delta\Delta\varphi_{U,1,2}(k)}{\delta p_x'(k)} & \dfrac{\delta\Delta\varphi_{U,1,2}(k)}{\delta p_y'(k)} & \dfrac{\delta\Delta\varphi_{U,1,2}(k)}{\delta p_z'(k)} & 0 & 0 & 0 \\ \vdots & \vdots & \vdots & \vdots & \vdots & \vdots \\ \dfrac{\delta\Delta\varphi_{U,n,m}(k)}{\delta p_x'(k)} & \dfrac{\delta\Delta\varphi_{U,1,2}(k)}{\delta p_y'(k)} & \dfrac{\delta\Delta\varphi_{U,1,2}(k)}{\delta p_z'(k)} & 0 & 0 & 0 \\ \vdots & \vdots & \vdots & \vdots & \vdots & \vdots \\ \dfrac{\delta\Delta\varphi_{U,(N-1),N}(k)}{\delta p_x'(k)} & \dfrac{\delta\Delta\varphi_{U,(N-1),N}(k)}{\delta p_y'(k)} & \dfrac{\delta\Delta\varphi_{U,(N-1),N}(k)}{\delta p_z'(k)} & 0 & 0 & 0 \end{bmatrix}$$

Anschließend wird der sogenannte Kalman Gain *K* berechnet, der ein Maß dafür ist wie stark der Vorschätzung und der Messung jeweils vertraut wird:

$$K(k) = P'(k)H(k)^T \cdot \left(H(k)P'(k)H(k)^T + R(k)\right)^{-1},$$

Mit:
$R(k)$: Kovarianzmatrix für das Rauschen, das den Messwerten beaufschlagt ist

Im nächsten Schritt wird nun der Vergleich von Messung und Zustand nach dem predict-Schritt vorgenommen. Die vorgeschätzte Position wird mittels $\varphi_{u,n} = -2\pi f_0 \tau_{u,n}$ in Phasenwerte umgerechnet und analog zum Messvektor die Differenzen für alle $(N \cdot (N\text{-}1)/2)$ möglichen Antennenkombinationen pro Station gebildet und für alle drei Radare analog zu den gemessenen Phasendifferenzen in einem Vektor zusammengefasst:

$$\begin{pmatrix} -2\pi f_0(\tau_{1,1} - \tau_{1,2}) \\ \vdots \\ -2\pi f_0(\tau_{1,n} - \tau_{1,m}) \\ \vdots \\ -2\pi f_0(\tau_{1,(N-1)} - \tau_{1,N}) \\ -2\pi f_0(\tau_{2,1} - \tau_{2,2}) \\ \vdots \\ -2\pi f_0(\tau_{2,n} - \tau_{2,m}) \\ \vdots \\ -2\pi f_0(\tau_{2,(N-1)} - \tau_{2,N}) \\ -2\pi f_0(\tau_{U,1} - \tau_{U,2}) \\ \vdots \\ -2\pi f_0(\tau_{U,n} - \tau_{U,m}) \\ \vdots \\ -2\pi f_0(\tau_{U,(N-1)} - \tau_{U,N}) \end{pmatrix}$$

Nun wird die Vorschätzung von Zustand und Kovarianzmatrix mithilfe der Messwerte und abhängig vom Kalman Gain korrigiert ("update") und die neue Position $x(k)$ zu erhalten:

$$x(k) = x'(k) + K(k)\mathrm{mod'}_{2\pi}\Big(z(k) - h\big(x'(k)\big)\Big),$$

$$P(k) = (I - K(k)H(k)) \cdot P'(k)$$

Mit:

$z(k)$: Messvektor
$h(x'(k))$: Vektor mit berechneten Phasenwerten für die vorgeschätzte Position
$\mathrm{mod'}_{2\pi}$: Die Modulo Operation bildet in diesem Fall die Phasen auf den Raum $[-\pi,\pi]$ ab, um eine Korrektur symmetrisch in alle Richtungen zu ermöglichen, also

$$\mathrm{mod'}_{2\pi}(\varphi) = \begin{cases} \mathrm{mod}_{2\pi}(\varphi) & \text{für } \mathrm{mod}_{2\pi}(\varphi) < \pi \\ \mathrm{mod}_{2\pi}(\varphi) - 2\pi & \text{für } \mathrm{mod}_{2\pi}(\varphi) > \pi \end{cases}.$$

Dieser Vorgang wird nun immer weiter wiederholt, wobei das Ergebnis $(x(k),P(k))$ vom letzten Durchlauf wieder den Ausgangspunkt für die Berechnung des nächsten Punktes bildet.

Für den ersten Messpunkt, für den es bekanntlich keinen Vorgänger gibt, muss ein Startwert angenommen werden. Dieser Startwert kann beispielsweis willkürlich gewählt werden. Sofern ein angenommener Startwert nicht zu einem stabilen Einschwingen des Filters führt, so kann der Vorgang mit einem oder mehreren anderen Startwerten wiederholt werden. Eine andere Möglichkeit besteht darin, einen Startwert basierend auf einem anderen Ortungsverfahren, etwa mit den oben im Stand der Technik dargestellten Funkortungsverfahren zu bestimmen.

Für den Fachmann ist es leicht nachvollziehbar, dass dieses Verfahren für alle wellenbasierten Sensoren eingesetzt werden kann bei denen ein Bezug zwischen Abstand und Phase besteht. Hierbei ist es nicht wichtig ob es sich um kohärente Signale (z.B. durch die reine Reflektion bei Primärradar) oder um inkohärente Signale handelt (z.B. Sekundärradar nach dem LPR-Prinzip oder Funkbojen).

Das Verfahren lässt sich durch die Fusion mit Daten weiterer Sensoren erweitern. So könnte z.B. für die Vorschätzung der Position Inertialsensorik oder die Steuerdaten von Robotern, Autos, autonomen Fahrzeugen, etc. mit herangezogen werden.

Die Positionsbestimmung kann auch Iterativ erfolgen, indem das Verfahren mehrmals hintereinander für einen Messpunkt ausgeführt wird um sich der besten Schätzung Position immer weiter anzunähern.

Etwaig auftretende Mehrdeutigkeiten (z.B. bei ungeschickter Wahl der Differenzen/Summen und der Sensorpositionen) können aufgelöst werden indem das Verfahren auf mehrere Hypothesen, z.B. die Positionen die mit der höchsten Wahrscheinlichkeit vorliegen, parallel angewendet wird, wie z.B. im Multihypothesen Kalman Filter.

Analog dazu können auch die auftretenden Mehrwege an den einzelnen Antennen parallel mit geschätzt werden. Werden die Antennen in ausreichendem Abstand gewählt, liegen an den unterschiedlichen Antennen auch unterschiedliche Mehrwege vor.

Das Verfahren lässt sich auch für die Ortung und Verfolgung mehrere Ziele gleichzeitig einsetzen bzw. erweitern. Diese lassen sich dabei aufgrund der Summen/Differenzbildung auch In-band auflösen.

Die Bestimmung der Phase, die anschließend für der Verfahren herangezogen wird kann z.B. durch eine Zelt-Frequenz Transformation (z.B. FFT oder Goertzel Filter), aber auch rekursiv mithilfe des vorher bestimmten Ortes erfolgen. Wird der Frequenzbereich zur Phasenbestimmung genutzt kann der Abtastpunkt für die Phasenauswertung rekursiv mithilfe des zuvor bestimmten Ortes ermittelt werden.

Phasenrichtcharakteristiken können direkt beim Vergleich von Phasen und Signallaufzeiten mit eingearbeitet werden, indem bei einem hypothetischen Ort der Winkel bzgl. der Ausrichtung der Antenne errechnet wird und daraus ein Phasenoffset errechnet wird, welcher der aus der Laufzeit der errechneten Phase aufaddiert wird.

Die Ortung nach diesem Verfahren kann simultan auch für die Kalibration von ungewollten Beiträgen zu Phase verwendet werden (z.B. verursacht durch unbekannte Laufzeiten in der Hardware).

Das Verfahren kann erweitert werden um neben der Position auch die aktuelle Geschwindigkeit, Beschleunigung, etc. des Objektes zu schätzen.

Das Verfahren kann problemlos auf modulierte Signale angewendet werden, z.B. indem das Signal demoduliert wird und dann Frequenz und Phase des Trägers ermittelt werden.

Anwendungsgebiete:

- Massive MIMO
- Roboter-Ortung
- Asset-Tracking (RFID)
- Fahrzeug-, Flugzeug-, Schiff-Tracking
- Personen-Tracking
- Überwachung von Transportwegen, Produktionshallen
- Werkzeug- und Werkortung
- Industrie 4.0
- Car to Car Ortung
- Indoor Lokalisierung
- Internet of Things
- Medizinische Anwendungen

Mögliche Infrastrukturen:

- Bestehende Infrastruktur wie WLAN, Mobilfunk, Kommunikationssysteme
- Radartechnik: CW, FMCW, UWB, OFDM, Korrelationsempfänger im Allgemeinen
- Akustik: Ultraschall
- Primärradar (reine Reflektion)
- Sekundärradar (Transponder antwortet, synchron oder asynchron)
- Beacon (absolut asynchron)

Das Verfahren lässt sich für die Ortung von emittierenden Objekten einsetzen, deren Signal in keinem deterministischen Frequenz- und Phasenbezug zu einem Vergleichssignal In einer Empfängereinheit steht.

Übliche Kommunikationssystemen nutzen homodyne oder heterodyne Empfänger-Architekturen, bei denen das Signal eines Senders mit einem oder mehreren Empfänger-Trägersignalen ein einer oder mehreren Stufen gemischt, d.h. in der Frequenzen versetzt, wird. Für das Ziel einer Ortung ist hierbei nachteilig, dass das Sende-Trägersignal i.d.R. nicht kohärent zu den Empfänger-Trägersignalen ist und daher die empfangenen Signalphasen aufgrund dieser Inkohärenz zunächst keinen Rückschluss auf die Entfernung zwischen Sender und Empfänger zulassen.

Geht man aber davon aus, dass es nur einen konstanten Phasenoffset und/oder einen Frequenzoffset, d.h.

einen sich linear ändernden Phasenoffset und/oder einen anderen deterministischen zeitabhängigen Phasenzusammenhang zwischen dem Sende-Trägersignal und den Empfänger-Trägersignalen gibt, ist es erfindungsgemäß möglich diesen Determinismus mit einer Erweiterung des erfindungsgemäßen Verfahrens ebenfalls mitzuschätzen und damit die Ortung zu verbessern.

Für Systeme, deren Sende- und Empfangssignal inkohärent sind, der Phasenunterschied zwischen Sender und Empfänger $\Phi_s$ für Messungen zu unterschiedlichen Zeitpunkten aber korreliert, ist es vorteilhaft, diesen mitzuschätzen. Werden mehrere, zueinander inkohärente Funkempfänger genutzt, entsteht für jede Station ein eigener unbekannter Phasenterm $\Phi_{s,n_p}$. Diese sind in der Regel unterschiedlich und haben einen unbekannten, sich zeitlich ändernden Bezug zueinander. Da der Phasenterm eines Funkempfängers $\Phi_{s,n_p}(k)$ zum Zeitpunkt $k$ mit dem Phasenterm $\Phi_{s,n_p}(k-1)$ über die Funktion $f_\Phi(\cdot)$ zusammenhängt, lässt der zu erwartende Phasenterm $\Phi_{s,n_p}'(k)$ schätzen durch

$$\Phi_{s,n_p}'(k) = f_\Phi\left(\Phi_{s,n_p}(k-1)\right).$$

Diese Information lässt sich für inkohärente Systeme nutzen, indem rekursiv

$$\min_{p_x(k),p_y(k),p_z(k),\Phi_{s,n_p}(k)} \sum_{n_l=1}^{N} \text{Pe}\left( \text{mod}'_{2\pi}\left( b_{n,n_l}\varphi_n \right.\right.$$

$$- b_{n,n_l}\left[ -\omega \frac{\sqrt{(p_x(k)-x_n)^2 + (p_y(k)-y_n)^2 + (p_z(k)-z_n)^2}}{c} \right.$$

$$\left.\left.\left. - \Phi_{s,n_p}(k) \right]\right)\right) + \sum_{n_p=1}^{N_p} c_{n_p}\text{Pe}_\Phi\left( \text{mod}'_{2\pi}\left( \Phi_{s,n_p}(k) - \Phi_{s,n_p}'(k) \right)\right)$$

minimiert wird. Hierbei wird in jeder Linearkombination $n_l$ die zugehörige Phase $\Phi_{s,n_p}(k)$ subtrahiert. $\text{Pe}_\Phi$ entspricht der Fehlerfunktion des Phasenvergleichs der geschätzten Phase $\Phi_{s,n_p}'(k)$ und korrigierten Phase $\Phi_{s,n_p}(k)$. $c_{n_p}$ entspricht einem beliebigen Gewichtungsfaktor.

**Patentansprüche**

1. Ortungsverfahren zur Lokalisierung wenigstens eines Objektes unter Verwendung wellenbasierter Signale bei dem von dem zu lokalisierenden Objekt ein Wellenfeld ausgeht und das vom Objekt ausgehende Wellenfeld von einer Anzahl N Empfänger empfangen wird,

   in jedem Empfänger wenigstens ein Messsignal gebildet wird, das von der räumlichen und zeitlichen Verteilung des Wellenfeldes abhängig ist und dessen Phasenverlauf durch die Signallaufzeit von dem Objekt zum jeweiligen Empfänger charakteristisch beeinflusst ist,
   wobei zur Positionsortung Phasenwerte für jedes der zumindest zwei Messsignale als gemessene Phasenwerte entnommen werden,
   wobei durch einen Vergleich wenigstens einer Linearkombination der gemessenen Phasenwerte mit wenigstens einer Linearkombination der dazugehörigen hypothetischen Phasenwerte, die sich durch den oder die Sender-Empfänger-Abstände ergeben, und unter Einsatz eines rekursiven Filters/Schätzers die aktuelle Position des zu ortenden Objektes zum Zeitpunkt k ermittelt wird,
   **dadurch gekennzeichnet, dass** für die rekursive Positionsschätzung eines Objektes die Summen und/oder Differenzen der gemessenen Phasenwerte von mindestens einem Antennenpaar wenigstens eines Empfängers im Vergleich zu deren zugehörigen Signallaufzeitdifferenzen ausgewertet werden.

**2.** Verfahren nach Anspruch 1, wobei ein vom Objekt ausgehendes Wellenfeld von ein oder mehreren Empfängern empfangen und zu kohärenten Messsignalen führt, wobei der oder die Empfänger die Messsignale an unterschiedlichen Empfängerpositionen empfangen.

**3.** Verfahren nach Anspruch 1 oder 2, wobei mehrere Signale unterschiedlicher Frequenz vom Objekt ausgehen und ein oder mehrere Empfänger verwendet werden, die Phasenwerte für unterschiedliche Frequenzen messen und in die Linearkombination der gemessenen Phasenwerte für die Positionsortung einbringen, wobei vorzugsweise die vom Objekt ausgehenden Signale unterschiedlicher Frequenz durch ein Objekt oder Transponder mit nichtlinearem Verhalten erzeugt werden.

**4.** Verfahren nach einem der vorhergehenden Ansprüche, wobei die unbekannte Sendephase des emittierenden Objektes rekursiv mitgeschätzt wird und / oder wobei das vom Objekt ausgehende Wellenfeld zu unterschiedlichen Zeitpunkten von einem oder mehreren Empfängern empfangen wird, wobei wenigstens ein Empfänger Phasenwerte zu unterschiedlichen Zeitpunkten bestimmt und diese in die Linearkombination der gemessenen Phasenwerte für die Positionsortung einbringt.

**5.** Verfahren nach Anspruch 3, wobei wenigstens ein Sender ein ausgehendes Wellenfeld mit einer Frequenz f0 erzeugt, das zu lokalisierende Objekt ein Wellenfeld abgibt, das wegen der Nichtlinearität des Objektes Vielfache der Frequenz f0 umfasst, deren Phasenwerte durch die ein oder mehreren Empfänger gemessen werden.

**6.** Verfahren nach Anspruch 5, wobei das vom Sender ausgehende Wellenfeld zumindest zwei Frequenzen (f1; f2; f3;....; fn) aufweist und durch die Nichtlinearität des Objektes Vielfache (n1*f1; n2*f2; n3*f3;....; nn*fn) und Intermodulationsprodukte (n1*f1+n2*f2+...+nn*fn;...) erzeugt werden, deren Phasenwerte durch den wenigstens einen Empfänger gemessen werden.

**7.** Verfahren nach Anspruch 5 oder 6, wobei das vom Sender ausgehende Wellenfeld zumindest zwei Frequenzen (f1; f2; f3;....; fm) besitzt, das Objekt die Frequenzen (fm+1,...,fn) selbst erzeugt und durch die Nichtlinearität Vielfache und Intermodulationsprodukte erzeugt werden, deren Phasenwerte gemessen werden.

**8.** Verfahren nach einem der vorhergehenden Ansprüche, **dadurch gekennzeichnet, dass** das vom Objekt ausgehende Wellenfeld durch Reflektion eines Sendesignals am Objekt erzeugt wird oder das Objekt durch selbständige Emittierung einer Welle, bspw. einer Wärmestrahlung, das Wellenfeld erzeugt oder durch eine interne Signalquelle des Objektes erzeugt wird.

**9.** Verfahren nach einem der vorhergehenden Ansprüche, **dadurch gekennzeichnet, dass** der Vergleich der gebildeten Linearkombinationen mit Hilfe des rekursiven Schätzers/Filters ausgewertet wird, um die Summe von Fehlerfunktionen der Vergleichsdifferenzen für alle gewählten Linearkombinationen zu minimieren.

**10.** Verfahren nach Anspruch 7, **dadurch gekennzeichnet, dass** die Linearkombinationen bzw. der rekursive Schätzer/Filter Bewegungsmodelle und/oder durch zusätzliche Sensorwerte, insbesondere einer Inertialsensorik und/oder eine Dopplerauswertungen und/oder magnetfeldbasierte Positionsbestimmung und\oder optische Systeme und\oder Ultraschall für die Positionsbestimmung berücksichtigt.

**11.** Verfahren nach einem der vorhergehenden Ansprüche, wobei als rekursiver Schätzer/Filter ein Extended Kalman Filter, ein Pseudo linear Filter oder eine gradientenbasierte Suche oder eine Brute Force Suche verwendet wird und / oder die Fehler der Linearkombinationen der gemessenen und hypothetischen Phasenwerte durch geeignete mathematische Operation auf einen definierten Werteraum abgebildet werden, insbesondere unter Verwendung einer modulo-Operation.

**12.** Verfahren nach einem der vorhergehenden Ansprüche, **dadurch gekennzeichnet, dass** die Ortung im Nahfeld der zur Ortung verwendeten Antennenanordnung(en) stattfindet und / oder **dadurch gekennzeichnet, dass** das Verfahren iterativ für eine zu schätzende Position ausgeführt wird.

**13.** Verfahren nach einem der vorhergehenden Ansprüche, wobei die unbekannten Phasenunterschiede $\Phi_{s,n_p}(k)$ zwischen dem emittierenden Objekt und dem wenigstens einen Empfänger rekursiv mitgeschätzt werden.

**14.** Verfahren nach einem der vorhergehenden Ansprüche, wobei die Wellenlänge kleiner ist als die maximale Distanz zweier Punkte innerhalb des Raumes, in dem das zu ortende Objekt lokalisiert werden soll und / oder wobei die maximale Distanz zweier Punkte innerhalb des Raumes, in dem das zu ortende Objekt lokalisiert werden soll, größer ist als der größte Eindeutigkeitsbereich, der sich durch die Linearkombinationen ergibt, welche durch den rekursiven Filters/Schätzers ausgewertet werden.

15. Ortungssystem bestehend aus wenigstens einem Empfänger für die Positionsortung wenigstens eines Objektes mit Mitteln zur Durchführung des Verfahrens gemäß einem der vorhergehenden Ansprüche.

**Claims**

1. A locating method for localizing at least one object using wave-based signals in which

   a wave field emanates from the object to be localized and the wave field emanating from the object is received by a plurality N receivers;
   at least one measurement signal is formed in each receiver that depends on the spatial and temporal distribution of the wave field and whose phase progression is characteristically influenced by the signal time of flight from the object to the respective receiver,
   wherein phase values for each of the at least two measurement signals are taken as measured phase values for the position localization,
   wherein the current position of the object to be localized is determined at the time k by a comparison of at least one linear combination of the measured phase values with at least one linear combination of the associated hypothetical phase values that result from the transmitter/receiver distance or distances and while using a recursive filter/estimator,
   **characterized in that** the sums and/or differences of the measured phase values are evaluated by at least one antenna pair of at least one receiver in comparison with their associated signal time of flight differences for the recursive position estimate of an object.

2. A method in accordance with claim 1, wherein a wave field emanating from the object is received from one or more receivers and results in coherent measurement signals, with the receiver or receivers receiving the measurement signals at different receiver positions.

3. A method in accordance with claim 1 or claim 2, wherein a plurality of signals of different frequencies emanate from the object and one or more receivers are used that measure phase values for different frequencies and introduce them into the linear combination of the measured phase values for the position localization, wherein preferably the signals of different frequencies emanating from the object are generated by an object or transponder having a non-linear behavior.

4. A method in accordance with one of the preceding claims, wherein the unknown transmission phase of the emitting object is also recursively estimated, and/or wherein the wave field emanating from the object is received by one or more receivers at different times, with at least one receiver determining phase values at different times and introducing them into the linear combination of the measured phase values for the position localization.

5. A method in accordance with claim 3, wherein at least one transmitter generates an emanating wave field having a frequency f0, the object to be localized emits a wave field that, due to the non-linearity of the object, comprises multiples of the frequency f0 whose phase values are measured by the one or more receivers.

6. A method in accordance with claim 5, wherein the wave field emanating from the transmitter has at least two frequencies (f1; f2; f3;....; fn) and multiples (n1*f1; n2*f2; n3*f3;....; nn*fn) and intermodulation products (n1*f1+n2*f2+...+nn*fn;...) are produced by the nonlinearity of the object whose phase values are measured by the at least one receiver.

7. A method in accordance with claim 5 or claim 6, wherein the wave field emanating from the transmitter has at least two frequencies (f1; f2; f3;....; fm), the object produces the frequencies (fm+1,...,fn) itself and multiples and intermodulation products whose phase values are measured are produced by the non-linearity.

8. A method in accordance with one of the preceding claims, **characterized in that** the wave field emanating from the object is produced by reflection of a transmission signal at the object or the object produces the wave field by independent emission of a wave, for example of thermal radiation, or is produced by an internal signal source of the object.

9. A method in accordance with one of the preceding claims, **characterized in that** the comparison of the formed linear combinations is evaluated with the aid of the recursive estimator/filter to minimize the sum of error functions of the comparison differences for all the selected linear combinations.

10. A method in accordance with claim 7, **characterized in that** the linear combinations or the recursive estimator/filter takes account of movement models and/or additional sensor values, in particular an inertial sensor system, and/or a double evaluation and/or magnetic field based position determination and/or optical systems and/or ultrasound for the position determination.

11. A method in accordance with one of the preceding claims, wherein an extended Kalman filter, a pseudo linear filter, or a gradient based search, or a brute force search is used as the recursive estimator/filter, and/or the errors of the linear combinations of the measured and hypothetical phase values are mapped to a defined value space by a suitable mathematical operation, in particular using a modulo operation.

12. A method in accordance with one of the preceding claims, **characterized in that** the localization takes place in the near field of the antenna arrangement(s) used for the localization, and/or **characterized in that** the method is performed iteratively for a position to be estimated..

13. A method in accordance with one of the preceding claims, wherein the unknown phase differences $\Phi_{s,n_p}(k)$ between the emitting object and the at least one receiver are also recursively estimated.

14. A method in accordance with one of the preceding claims, wherein the wavelength is smaller than the maximum distance of two points within the space in which the object to be localized is to be localized, and/or wherein the maximum distance of two points within the space in which the object to be localized is to be localized is larger than the largest uniqueness region that results from the linear combinations that are evaluated by the recursive filter/estimator.

15. A localization system comprising at least one receiver for the position localization of at least one object having means for performing the method in accordance with one of the preceding claims.

**Revendications**

1. Procédé de localisation d'au moins un objet à l'aide de signaux à base d'ondes, dans lequel

   un champ d'ondes part de l'objet à localiser et le champ d'ondes partant de l'objet est reçu par un nombre N de récepteurs,
   au moins un signal de mesure est formé dans chaque récepteur, lequel est dépendant de la répartition dans l'espace et dans le temps du champ d'ondes et dont la courbe de phase est influencée de manière caractéristique par le temps de propagation de signal de l'objet au récepteur respectif,
   dans lequel, pour la localisation de position, des valeurs de phase pour chacun des au moins deux signaux de mesure sont prélevées comme valeurs de phase mesurées,
   dans lequel, par une comparaison d'au moins une combinaison linéaire des valeurs de phase mesurées avec au moins une combinaison linéaire des valeurs de phase hypothétiques associées, qui résultent de la ou des distances entre émetteur et récepteur, et en utilisant un filtre/estimateur récursif, la position actuelle de l'objet à localiser à l'instant k est déterminée,
   **caractérisé en ce que**, pour l'estimation récursive de position d'un objet, les sommes et/ou les différences des valeurs de phase mesurées d'au moins une paire d'antennes d'au moins un récepteur sont évaluées par comparaison avec leurs différences de temps de propagation de signal associées.

2. Procédé selon la revendication 1, dans lequel un champ d'ondes partant de l'objet est reçu par un ou plusieurs récepteurs et entraîne des signaux de mesure cohérents, le ou les récepteurs recevant les signaux de mesure en différentes positions de récepteur.

3. Procédé selon la revendication 1 ou 2, dans lequel plusieurs signaux de fréquences différentes partent de l'objet et un ou plusieurs récepteurs sont utilisés, qui mesurent des valeurs de phase pour différentes fréquences et les introduisent dans la combinaison linéaire des valeurs de phase mesurées pour la localisation de position, les signaux de fréquences différentes partant de l'objet étant de préférence générés par un objet ou transpondeur au comportement non linéaire.

4. Procédé selon l'une des revendications précédentes, dans lequel la phase d'émission inconnue de l'objet émetteur est estimée simultanément de manière récursive et/ou dans lequel le champ d'ondes partant de l'objet est reçu à différents instants par un ou plusieurs récepteurs, au moins un récepteur déterminant des valeurs de phase à différents instants et les introduisant dans la combinaison linéaire des valeurs de phase mesurées pour la localisation de position.

5. Procédé selon la revendication 3, dans lequel au moins un émetteur génère un champ d'ondes sortant avec une fréquence f0, l'objet à localiser émet un champ d'ondes qui comprend, en raison de la non-linéarité de l'objet, des multiples de la fréquence f0, dont les valeurs de phase sont mesurées par le ou les plusieurs récepteurs.

6. Procédé selon la revendication 5, dans lequel le champ d'ondes partant de l'émetteur présente au moins deux fréquences (f1 ; f2 ; f3 ; ... ; fn) et, en raison de la non-linéarité de l'objet, des multiples (n1*f1 ; n2*f2 ; n3*f3 ; ... ; nn*fn) et des produits d'intermodulation (n1*f1+n2*f2+...+nn*fn ;...) sont générés, dont les valeurs de phase sont mesurées par l'au moins un récepteur.

7. Procédé selon la revendication 5 ou 6, dans lequel le champ d'ondes partant de l'émetteur possède au moins deux fréquences (f1 ; f2 ; f3 ; ... ; fm), l'objet génère lui-même les fréquences (fm+1, ..., fn) et, en raison de la non-linéarité, des multiples et des produits d'intermodulation sont générés, dont les valeurs de phase sont mesurées.

8. Procédé selon l'une des revendications précédentes, **caractérisé en ce que** le champ d'ondes partant de l'objet est généré par la réflexion d'un signal d'émission sur l'objet ou l'objet génère, par émission autonome d'une onde, par exemple un rayonnement thermique, le champ d'ondes ou il est généré par une source de signal interne de l'objet.

9. Procédé selon l'une des revendications précédentes, **caractérisé en ce que** la comparaison des combinaisons linéaires formées est évaluée à l'aide de l'estimateur/du filtre récursif pour minimiser la somme de fonctions d'erreur des différences issues de la comparaison pour toutes les combinaisons linéaires choisies.

10. Procédé selon la revendication 7, **caractérisé en ce que** les combinaisons linéaires ou l'estimateur/le filtre récursif prennent en compte des modèles de mouvement et/ou des valeurs de détection supplémentaires, en particulier d'un système de détection inertiel et/ou une évaluation sur la base de l'effet Doppler et/ou une détermination de position sur la base d'un champ magnétique et/ou des systèmes optiques et/ou des ultrasons pour la détermination de position.

11. Procédé selon l'une des revendications précédentes, dans lequel un filtre de Kalman étendu, un filtre pseudo-linéaire ou une recherche sur la base du gradient ou une recherche par force brute est utilisé(e) comme estimateur/filtre récursif et/ou les erreurs des combinaisons linéaires des valeurs de phase mesurées et hypothétiques sont représentées par une opération mathématique adaptée sur un espace de valeurs défini, en particulier au moyen d'une opération modulo.

12. Procédé selon l'une des revendications précédentes, **caractérisé en ce que** la localisation a lieu dans le champ proche du ou des agencement(s) d'antennes utilisé(s) pour la localisation et/ou **caractérisé en ce que** le procédé est réalisé de manière itérative pour une position à estimer.

13. Procédé selon l'une des revendications précédentes, dans lequel les différences de phase inconnues $\varphi_{s,n_p}(k)$ entre l'objet émetteur et l'au moins un récepteur sont estimées simultanément de manière récursive.

14. Procédé selon l'une des revendications précédentes, dans lequel la longueur d'onde est inférieure à la distance maximale entre deux points à l'intérieur de l'espace dans lequel l'objet à localiser doit être localisé et/ou dans lequel la distance maximale entre deux points à l'intérieur de l'espace dans lequel l'objet à localiser doit être localisé est supérieure à la plus grande plage d'unicité qui résulte des combinaisons linéaires, qui sont évaluées par le filtre/estimateur récursif.

15. Système de localisation constitué d'au moins un récepteur pour la localisation de position d'au moins un objet, comportant des moyens pour exécuter le procédé selon l'une des revendications précédentes.

# Fig. 1

$A_1 = (x_1, y_1, z_1)$

$A_2 = (x_2, y_2, z_2)$

$A_n = (x_n, y_n, z_n)$

$A_N = (x_N, y_N, z_N)$

$r_n$

$P(k) = (p_x(k), p_y(k), p_z(k))$

x

z

y

# Fig. 2

letzte
Position
$p_x(k-1)$
$p_y(k-1)$
$p_z(k-1)$

Verzögerung

Schätzung
neue
Position
$p_x(k)$
$p_y(k)$
$p_z(k)$

Vergleich

Messwerte von
N
Messpositionen

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **VOSSIEK, M. ; WIEBKING, L. ; GULDEN, P. ; WIEGHARDT J. ; HOFFMANN C.** *Wireless Local Positioning - Concepts, Solutions, Applications*
- **DOBREV Y ; SHMAKOV D.** *A Bilateral 24 GHz Wireless Positioning System for 3D Real-Time Localization of People and Mobile Robots*
- Phase-Based UHF RFID Tracking With Nonlinear Kalman Filtering and Smoothing. **SIMO SÄRKKÄ et al.** IEEE SENSORS JOURNAL. IEEE SERVICE CENTER, 01. Mai 2012, vol. 12, 904-910
- **VON BOYD S. ; VANDENBERGHE L.** *Convex Optimization,* 294-300
- **REID I. ; TERM H.** *Lecture Notes Estimation II,* 1-7